# EUROPEAN PATENT APPLICATION

(11) **EP 2 226 404 A1**
(43) Date of publication of application: **08.09.2010**
(21) Application number: 08855403.5
(22) Date of filing: 21.11.2008
(51) Int. Cl.: C22C 29/16, C04B 35/58, C22C 1/05

(54) **CERAMIC FOR DECORATIVE PARTS AND DECORATIVE PARTS MADE BY USING THE CERAMIC**

(30) Priority: 28.11.2007 JP 2007306890
(71) Applicant: Kyocera Corporation, Kyoto-shi Kyoto 612-8501 (JP)
(72) Inventor: OHTA, Mizuho, Kirishima-shi Kagoshima 899-4396 (JP); MURAKAWA, Shunichi, Kirishima-shi Kagoshima 899-4396 (JP)
(74) Representative: HOFFMANN EITLE
(86) International application number: PCT/JP2008/071227
(87) International publication number: WO 2009/069549

(57) **Abstract**

An object of the present invention is to provide ceramics for decorative component which has golden color tone and provides high-grade impression, aesthetic satisfaction and mind soothing effect, and has high mechanical properties such as hardness and toughness with less color difference. The present invention relates to a ceramics for decorative component, composed of titanium nitride-based sintered material which contains titanium nitride as a main component, wherein the titanium nitride-based sintered material contains nickel, niobium, chromium and carbon, and wherein a content of carbon is not less than 0.5% by mass nor more than 0.9% by mass. According to the ceramics for decorative component of the present invention, it is possible to have better mechanical properties such as hardness and toughness since carbon diffuses and forms solid solution with titanium nitride that accelerates the sintering process. In addition, since the black color of carbon is expected to suppress the surface color from becoming uneven through the effect of making the color a little achromatic. As a result, color difference (ΔE*ab) can be decreased so that difference in color tones is hardly felt among the decorative components.

## Description

### Technical Field

The present invention relates to ceramics for decorative component that produces golden color of beautiful color tone, and a decorative component using the same.

### Background Art

Decorative components of watch and decorative components of accessory that show golden color have been made from gold or an alloy thereof, or by plating various metals, in consideration of color tone and corrosion resistance.

However, gold, alloys thereof and plated metallic materials are all low in hardness, and have such a problem that contact with a hard object results in scratch or dent on the surface or deformation thereof. Recently, various ceramics for decorative components have been proposed to solve this problem.

Patent Document 1, for example, discloses a sintered alloy (ceramics for decorative component) which contains 45 to 75% by mass of titanium nitride and 7.5 to 25% by mass of titanium carbide as a hard phase, 1 to 10% by mass of chromium in terms of equivalent carbide, 0.1 to 5% by mass of molybdenum in terms of equivalent carbide and 5 to 20% by mass of nickel as a binder phase, and has the lightness index L* from 65 to 69, a* from 4 to 9 and b* from 5 to 16 in the L*a*b* color space as measured with a colorimeter.

Patent Document 2 discloses a sintered alloy for decoration (ceramics for decorative component) consisting of a hard phase (70 to 98% by mass) represented by formula (A), a binder phase (2 to 30% by mass) of at least one kind selected from among Fe, Ni, Co, Cr, Mo and W, and inevitable impurities: 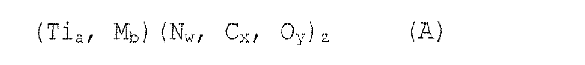 where M represents at least one kind selected from among Zr, Hf, V, Nb, Ta and Cr;
a+b = 1, 1 ≥ a ≥ 0.4, 0.6 ≥ b ≥ 0;
w+x+y = 1, x+y > 0, 1 > w ≥ 0.4
0.19 ≥ x ≥ 0, 0.6 ≥ y ≥ 0, 0.93 ≥ z ≥ 0.6

Patent Document 3 discloses a sintered alloy for decoration (ceramics for decorative component) consisting of a binder phase (2 to 30% by mass) of at least one kind selected from among Fe, Ni, Co, Cr, Mo and W, a reinforcement phase (0.1 to 10% bv mass) constituted from a metal of at least one kind selected from among P, Al, B, Si, Mn, Ti, Zr, Hf, V, Nb and Ta, alloy or an oxide of Al, Y, Zr, Mg, Ni and Si, a nitride of Al, Si and B, a carbide of Mo, or a compound of at least one kind of a mutual solid solution thereof, a hard phase represented by formula (A), and inevitable impurities (remainder): 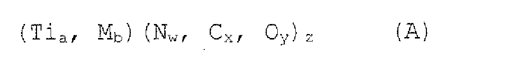 where M represents at least one kind selected from among Zr, Hf, V, Nb, Ta and Cr;
a+b = 1, 1 ≥ a ≥ 0.4, 0.6 ≥ b ≥ 0;
w+x+y = 1, x+y > 0, 1 > w ≥ .4
0.5 ≥ x ≥ 0, 0.6 ≥ y ≥ 0.06, 0.93 ≥ z ≥ 0.6

Patent Documents 2 and 3 disclose a sintered alloy for decoration (ceramics for decorative component) which maintains golden color tone by means of the hard phase constituted mainly from TiN₂ (0.6 ≤ z ≤ 0.95). These documents describe that the color tone shifts from golden color tone to pale golden color as the value of z becomes lower than the value of the stoichiometrical composition, and that the color tone can be easily controlled in a range from deep and pale golden color to vivid golden color, by adding TiO, ZrN, HfN, VN, NbN, TaN, CrN, Cr₂N, TaC and NbC that shows golden color to the sintered alloy.

Patent Document 4 discloses ceramics for decorative component which contains titanium nitride as the main component, nickel as an auxiliary component and at least one kind selected from among vanadium nitride, niobium nitride, tantalum nitride, molybdenum carbide, niobium carbide, tungsten carbide and tantalum carbide as an additive component, and has an arithmetic mean height Ra of not more than 0.03 µm, a lightness index L* in a range from 72 to 84 and chromaticness indices a* and b* in ranges from 4 to 9 and from 28 to 36, respectively, in the L*a*b* color space of CIE1976.
Patent Document 1: Japanese Unexamined Patent Publication (Kokai) No. 2003-13154
Patent Document 2: Japanese Unexamined Patent Publication (Kokai) No. 58-204149
Patent Document 3: Japanese Unexamined Patent Publication (Kokai) No. 58-204150
Patent Document 4: Specification of European Patent Publication No. 1,767,661

### Disclosure of the Invention

### Problems to be Solved by the Invention

However, although the sintered alloy (ceramics for decorative component) described in Patent Document 1 has excellent durability without the possibility of the surface coat to peel off because it is a sintered material, the surface color is somewhere between a combination of silver and violet and a combination of silver and pink, not golden color tone.

While Patent Documents 2 and 3 disclose inventions that provide color tones in a range from deep and pale golden color to vivid golden color by adding TiO, ZrN, HfN, VN, NbN, TaN, CrN, Cr₂N, TaC and NbC, the sintered alloy for decoration (ceramics for decorative component) that is disclosed may have widely varying proportions of carbon content that has influence on the mechanical properties such as hardness and toughness and on the difference in color tones that may arise among the decorative components. As a result, there have been such problems as decorative components having poor mechanical properties are produced or significant difference is generated in color tones among the decorative components.

While Patent Document 4 discloses ceramics for decorative component that has golden color which provides high-grade impression, aesthetic satisfaction and mind soothing effect with the color tone welcomed by today's market, carbon content in this ceramics for decorative component is not controlled and such problems may occur as decorative components having poor mechanical properties are produced or significant difference is generated in color tones among the decorative components.

The present invention has been made so as to solve the problems described above and an object thereof is to provide ceramics for decorative component which has golden color tone and provides high-grade impression, aesthetic satisfaction and mind soothing effect, and has high mechanical properties such as hardness and toughness with less color difference, and a decorative component which uses the ceramics for decorative component.

### Means for Solving the Problems

The ceramics for decorative component of the present invention are ceramics for decorative component, composed of titanium nitride-based sintered material which contains titanium nitride as a main component, wherein the titanium nitride-based sintered material contains nickel, niobium, chromium and carbon, and wherein a content of carbon is not less than 0.5% by mass nor more than 0.9% by mass.

### Effects of the Invention

According to the ceramics for decorative component of the present invention, it is possible to produce satisfactory golden color because the titanium nitride-based sintered material contains titanium nitride as the main component and contains nickel, niobium, chromium and carbon, with carbon content being not less than 0.5% by mass nor more than 0.9% by mass. The ceramics for decorative component of the present invention also has better mechanical properties such as hardness and toughness since carbon diffuses and forms solid solution with titanium nitride that accelerates the sintering process, while the black color of carbon is expected to suppress the surface color from becoming uneven through the effect of making the color a little achromatic. As a result, color difference (ΔE*ab) can be decreased so that difference in color tones is hardly felt among the decorative components.
Thus, according to the present invention, it is possible to provide ceramics for decorative component which have golden color tone and provide high-grade impression, aesthetic satisfaction and mind soothing effect, and have high mechanical properties such as hardness and toughness with less color difference; and a decorative component that uses the ceramics for decorative component.

### Brief Description of the Drawings

Fig. 1 shows an example of watch case which is a decorative component for watch of the present invention, Fig. 1(a) in a perspective view of the front surface of the watch case, and Fig. 1(b) in a perspective view of the back surface of the watch case of Fig. 1(a).
Fig. 2 is a perspective view showing another example of watch case which is a decorative component for watch of the present invention.
Fig. 3 is a schematic diagram showing an example of constitution of the watchband as an application of the decorative component of watch of the present invention.
Fig. 4 is a perspective view showing an example of mobile phone that uses a decorative component for mobile terminal of the present invention.
Fig. 5 is a perspective view showing the mobile phone shown in Fig. 4 in a state of chassis opened.
Fig. 6 is a schematic diagram showing an example of constitution of a soap case as an application of the decorative component for daily life articles of the present invention.
Fig. 7 is a schematic diagram showing an example of constitution of a coffee cup set as an application of the decorative component for daily life articles of the present invention.
Fig. 8 is a perspective view showing an example of vehicle body having the decorative component for vehicle parts of the present invention mounted thereon.
Fig. 9 is a front view showing an example of corner pole that uses the decorative component for vehicle parts of the present invention.
Fig. 10 is a front view showing an example of golf club that uses the decorative component for sports goods of the present invention.
Fig. 11 is a bottom view showing an example of spike shoes that use the decorative component for sports goods of the present invention.
Fig. 12 is a perspective view showing an example of guitar that uses the decorative component for musical instrument of the present invention.
Fig. 13 is a schematic diagram showing an example of artificial dental crown that uses the decorative component for accessory of the present invention.
Fig. 14 is a front view showing an example of earphone unit that uses the decorative component for accessory of the present invention.
Fig. 15 is a perspective view showing an example of eyeglass frame that uses the decorative component for accessory of the present invention.

### Description of Reference Numerals

- 10A, 10B:: Watch case
- 20:: Inner link
- 30:: Outer link
- 40:: Pin
- 50:: Watchband
- 60:: Mobile phone
- 80:: Soap case
- 90:: Coffee cup
- 101:: Emblem
- 102:: Corner pole
- 110:: Golf club
- 120:: Shoes
- 130:: Guitar
- 141:: Artificial dental crown
- 150:: Earphone unit
- 160:: Eyeglasses

### Best Mode for Carrying Out the Invention

Best mode for carrying out the present invention will be described below.

The ceramics for decorative component of the present invention is formed from titanium nitride-based sintered material that contains nickel, niobium, chromium and carbon.

The titanium nitride-based sintered material of the present invention is a sintered material that contains titanium nitride (TiN) as the main component. The main component in the present invention refers to a component that occupies not less than 50% by mass of the composition of the ceramics for decorative component based on 100% by mass of the all components. Titanium nitride used as the main component has a feature that golden color that is suitable for decorative items, and shows high mechanical properties such as hardness and toughness. Therefore, it is preferable that the ceramics for decorative component of the present invention formed from titanium nitride-based sintered material contains not less than 70% by mass of titanium nitride.

Nickel is high in malleability and serves as a binder that bonds the crystal grains of titanium nitride that is the main component. Niobium serves as a color regulating agent, and niobium compounds having compositions such as NbNi₃ or NbC, besides metal niobium, may be contained. Chromium bonds with oxygen contained in the air to form a dense oxide film on the decorative surface, so as to improve corrosion resistance. Carbon content improves the mechanical properties such as hardness and toughness.

It is important that the ceramics for decorative component of the present invention is composed of a titanium nitride-based sintered material and includes carbon content of not less than 0.5% by mass nor more than 0.9% by mass, in addition to nickel, niobium and chromium. When the titanium nitride-based sintered material having the constitution described above contains carbon in concentration within this range, carbon diffuses and forms solid solution with titanium nitride that accelerates the sintering process, so as to improve the mechanical properties such as hardness and toughness. Carbon has influence on chromaticness index a* and on color difference (ΔE*ab) that is defined by the formula (A). When carbon is contained within the range of concentrations described above, since the black color of carbon suppresses the surface color from becoming uneven through the effect of making the color a little achromatic, satisfactory golden color can be produced with almost no difference recognized in color tones among the decorative components.

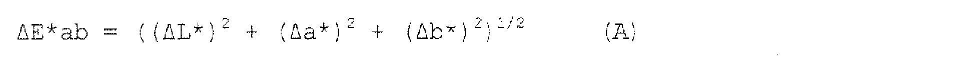

When carbon content is less than 0.5% by mass, mechanical properties such as hardness and toughness cannot be made sufficiently high, and the effect of the black color of carbon to make the color a little achromatic is hardly achieved, thus resulting in a large color difference (ΔE*ab). In contrast, when carbon content is more than 0.9% by mass, although mechanical properties such as hardness and toughness become high, the color shows reddish tone and the golden color that provides high-grade impression, aesthetic satisfaction and mind soothing effect to the user is lost.

To make the ceramics for decorative component that has golden color that provides high-grade impression, aesthetic satisfaction and mind soothing effect to the user, it is preferable that the arithmetic mean height Ra of the decorative surface is not more than 0.03 µm, and the decorative surface has such a color tone that the lightness index L* is not less than 72 nor more than 84 in the L*a*b* color space of CIE1976 of the decorative surface, and a chromaticness indice a* is not less than 3 nor more than 9 and a chromaticness indice b* is not less than 27 nor more than 36, in the L*a*b* color space of CIE1976. Decorative surface having such properties as described above reflects light with higher reflectivity, shows higher luster and provides high-grade impression and aesthetic satisfaction.

The lightness index L* indicates the degree of lightness or darkness of a color tone, while a higher value of the lightness index L* means lighter color tone and a lower value of the lightness index L* means darker color tone. The chromaticness index a* represents the position in red to green axis of color tone. A larger positive value of chromaticness index a* means red color, and a smaller absolute value of chromaticness index a* means dull color tone without clearness, while a negative chromaticness index a* having a larger absolute value means green color. The chromaticness index b* represents the position in yellow to blue axis of color tone. A larger positive value of chromaticness index b* means yellow color tone, and a smaller absolute value of b* means dull color tone without clearness, while a negative chromaticness index b* having a larger absolute value means blue color.

Arithmetic mean height Ra of the decorative surface affects the reflectivity of the surface to light while causing the color tone to change, and therefore it is preferable to control the arithmetic mean height Ra of the decorative surface to not more than 0.03 µm. This increases the surface reflectivity to light, and increases the value of the lightness index L*. When the arithmetic mean height Ra of the decorative surface is more than 0.03 µm, the value of the lightness index L* decreases to produce dark color tone, and the high-grade impression may be impaired.

Visible light collectively refers to light having wavelengths ranging from 380 to 780 nm. By setting the arithmetic mean height Ra of the decorative surface to not more than 0.03 µm, the visible light is broken into components of different wavelengths. As reflection of light in a region of wavelengths from 450 to 500 nm which corresponds to blue color is suppressed and reflection of light in a region of wavelengths from 570 to 590 nm which corresponds to yellow color is increased, the ceramics for decorative component produces golden color that provides high-grade impression, aesthetic satisfaction and mind soothing effect by setting the arithmetic mean height Ra to not more than 0.03 µm. It is particularly preferable that reflectivity of the decorative surface to light in a region of wavelengths from 570 to 700 nm is not less than 50%.

The arithmetic mean height Ra may be measured in accordance with JIS B 0601-2001. When measuring with a contact probe type surface roughness meter with the measurement length and the cut-off point being set to 5 mm and 0.8 mm, respectively, for example, a stylus having tip radius of 2 µm may be put into contact with the decorative surface of the ceramics for decorative component, and scanned at a speed of 0.5 mm/sec. The arithmetic mean height Ra of the decorative surface is the average of values measured at 5 points.

By controlling the value of the lightness index L* of not less than 72 nor more than 84, it is made possible to give the proper lightness to golden color tone. By controlling the value of chromaticness index a* of not less than 3 nor more than 9, it is made possible to suppress reddish tone without losing the clearness of the color tone. By controlling the value of chromaticness index b* of not less than 27 nor more than 36, it is made possible to produce golden color without losing the clearness of the color tone. It is particularly probable that lightness index L* is not less than 72 nor more than 79.

It is preferable that the decorative surface of the ceramics for decorative component of the present invention has open void ratio of not more than 2.5%. An open void ratio in the decorative surface exerts an influence particularly on the value of the lightness index L*. A higher open void ratio results in a lower value of the lightness index L*, and a lower open void ratio results in a higher value of the lightness index L*. By controlling the open void ratio in the decorative surface to not more than 2.5%, it is made possible to control the lightness index L* to not less than 77, thus resulting in color tone that is more loved by people. It is more preferable to control the lightness index L* to not less than 78, in which case it is preferable to control the open void ratio to not more than 1.1%.

Open void ratio in the decorative surface may be determined by capturing an image of the decorative surface with a CCD camera under a metallurgical microscope with a magnifying power of 200 times, and measuring the area of open voids in one field of view, with the measuring area of one field of view in the image being set to 2.25 × 10⁻² mm² and the number of fields of view set to 20, and calculating the ratio of the area of open voids to the total measuring area 4.5 × 10⁻¹ mm², using an image analyzer (LUZEX-FS manufactured by Nireco).

In the present invention, the decorative surface of the ceramics for decorative component refers only to a surface of a decorative component which is required to have decorative value, and does not mean the entire surface. In case the ceramics for decorative component of the present invention is used in a watch case, for example, the outside surface of the watch case is subjected to aesthetic evaluation and is required to have decorative value, and is therefore referred to as the decorative surface.

The values of the lightness index L* and the chromaticness indices a* and b* in the L*a*b* color space of CIE1976 of the decorative surface can be measured by the procedure specified in JIS Z 8722-2000. For example, a spectrocolorimeter (CM-3700d from Konica Minolta Holdings Inc., etc.) may be used in combination with CIE standard light source of D65 with view angle being set to 10 degrees and the measurement area set to 5 mm by 7 mm.

The titanium nitride-based sintered material that constitutes the ceramics for decorative component of the present invention preferably has composition represented by TiNₓ, x being in a range of 0.8 ≤ x ≤ 0.96. As will be described later, color tone is influenced by the value of atomicity x in the composition formula of TiNₓ. As the value of atomicity x becomes smaller, the color tone changes from gold to pale golden color. As the value of atomicity x becomes larger, the color tone changes to dull and dark golden color. Accordingly, the value of atomicity x in the composition formula TiNₓ is preferably not less than 0.8 nor more than 0.96 from such a point of view. When the value of atomicity x is within this range, lustrous color tone is enhanced, so that higher high-grade impression and higher aesthetic satisfaction can be provided.

Titanium nitride can be substituted by or react with oxygen and carbon contained in the degreasing atmosphere or firing atmosphere, and turn to titanium oxide-carbide-nitride (TiCNO). Therefore, the value of atomicity x in TiNₓ can be determined as follows by using an oxygen-nitrogen analyzer and a carbon analyzer. Specifically, after measuring the contents of oxygen, nitrogen and carbon in the titanium nitride-based sintered material with these analyzers, titanium content is determined by subtracting the contents of oxygen, nitrogen and carbon from 100% by mass. Since titanium content and nitrogen content divided by the respective atomic weights give the number of moles of the respective elements contained, the value of atomicity x is the ratio of the number of moles of nitrogen to the number of moles of titanium.

It is preferable that the ceramics for decorative component of the present invention contains nickel with a concentration of not less than 7% by mass nor more than 14.5% by mass, and niobium with a concentration of not less than 2.5% by mass nor more than 10% by mass.
Nickel is high in malleability and serves as a binder that bonds the crystal grains of titanium nitride that is the main component, and is therefore preferably added in a large quantity. However, too high a concentration of nickel in the ceramics for decorative component that is put on a human body may cause nickel to react with sweat and elute, thus changing the color of the ceramics for decorative component to reddish color tone and losing golden color that provides decorative values such as high-grade impression, aesthetic satisfaction and mind soothing effect to the user. In addition, chromaticness index a* in the L*a*b* color space of CIE1976 becomes higher, although both the lightness index L* and chromaticness index b* become lower. Thus nickel concentration is preferably not less than 7% by mass nor more than 14.5% by mass. In case the ceramics for decorative component is used in articles that are put on human bodies such as watch case or links of band, in particular, nickel concentration is preferably not less than 7% by mass nor more than 10% by mass.

The reason for setting the niobium concentration to not less than 2.5% by mass nor more than 10% by mass is that niobium serves as a color tone regulating agent that increases the lightness index L* by forming a solid solution with titanium nitride or melting among nickel, but may make it difficult to sinter because a covalent bonding is strong when niobium concentration is high.

It is more preferable that niobium concentration is not less than 3% by mass nor more than 8% by mass. This is because niobium has the effect of suppressing crystal grains from growing and thereby increasing the crystal boundaries, so that the incident light is significantly influenced by mirror reflection caused by the crystal that forms the decorative surface and by the dispersive reflection caused by the crystal boundaries, thus resulting in higher lightness index L* of the decorative surface. In addition, high synergy effect of the color tone enhances the lustrous color tone and provides high-grade impression and aesthetic satisfaction, thereby achieving mind soothing effect through visual sense.

Meanwhile light is reflected generally through mirror reflection and dispersive reflection. In this specification, mirror reflection refers to a case where the angle of incidence of light ray onto mirror-smooth decorative surface, or microscopically onto the crystal that forms the decorative surface, and the angle of reflection therefrom are equal. Dispersive reflection refers to a case where light that has entered in the crystal boundary undergoes random reflections many times before exiting to the outside.

Surface roughness of the crystal that forms the decorative surface can be adjusted by barrel polishing operation. When surface roughness of the crystal surface which does not include crystal boundaries observed under an atomic force microscope is controlled to 1 to 2 nm in terms of the arithmetic mean height Ra, reflection on the crystal surface partially changes from mirror reflection to dispersive reflection, so that chromaticness index b* of the decorative surface can be increased to not less than 32 which results in vivid golden color and is preferable.

It is preferable that nickel and niobium react and precipitate as a compound nickel-niobium, for example, NbNi₃. Precipitation of NbNi₃ causes the lightness index L* to increase so as to produce the impression of noble lightness. Nickel-niobium such as NbNi₃ can be detected by X-ray diffraction analysis.

It is preferable that the ceramics for decorative component of the present invention contains chromium with a concentration of not less than 1.5% by mass nor more than 6.5% by mass. Chromium bonds with oxygen contained in the air to form a dense oxide film on the decorative surface, so as to improve corrosion resistance. Moreover, when nickel forms grain boundaries that bond titanium nitride in the state of nickel atoms surrounding chromium atoms, nickel and chromium form nickel-chromium compound so as to suppress nickel from being ionized and eluting. However, since chromium content affects the color clearness, it is preferable to contain chromium with a concentration of not less than 1.5% by mass nor more than 6.5% by mass, in order to suppress nickel from eluting while achieving corrosion resistance and clearness at the same time.

The state of nickel atoms surrounding chromium atoms refers to the state of chromium atoms being surrounded by crystal boundaries without making contact with titanium nitride crystal. This state can be confirmed by comparing an image of the decorative surface captured by a scanning electron microscope and an image of the decorative surface that shows the distribution of nickel and chromium detected by energy dispersion type (EDS) X-ray micronalyser.

Contents of titanium, nickel, niobium and chromium can be measured by fluorescence X-ray analysis (XRF). Specifically, at least two samples of powder mixture of titanium nitride, nickel, niobium and chromium with different concentrations of the elements are prepared, and are molded by pressing to make standard samples. The standard samples are irradiated with X rays, and calibration curves are drawn by applying the least squares method to the relation between the intensities of fluorescence X rays and known concentrations. Then the ceramics for decorative component of the present invention is crushed into powder and is molded by pressing to make a measurement sample. The measurement sample is irradiated with X rays, and the intensity of fluorescence X ray is measured so as to determine the concentration from the calibration curve. Nitrogen content can be measured by using an oxygen-nitrogen analyzer, and carbon content can be measured by using a carbon analyzer.

It is preferable that the ceramics for decorative component of the present invention constituted from titanium nitride-based sintered material has thermal conductivity of not less than 22 w/(m·K) nor more than 26 w/(m·K). With thermal conductivity of not less than 22 w/(m·K), good heat dissipation can be achieved. This enables it to quickly dissipating the heat generated by electronic components such as insulated gate-bipolar-transistor (IGBT) to the outside, so as to reduce the possibility of malfunction. Therefore, it is preferable to use the ceramics for decorative component of the present invention in part of a mobile terminal having electronic components packaged therein.

When thermal conductivity is not more than 26 W/(m·K), dew condensation can be suppressed from occurring on the surface of the ceramics for decorative component of the present invention. Therefore, an emblem or other component of a vehicle formed from the ceramics for decorative component of the present invention hardly undergoes dew condensation and the resultant loss of aesthetic value even in the cold atmosphere of a morning in winter. It is preferable that thermal conductivity is not less than 22 W/(m·K) nor more than 26 W/(m·K) also because heat dissipation characteristic and thermal shock resistance can both be secured. It is preferable that thermal expansion coefficient in a temperature range from 40°C to 800°C is not less than 8.5 × 10⁻⁶/°C nor more than 9.7 × 10⁻⁶/°C. The thermal expansion coefficient can be determined in accordance with JIS R 1618-2002.

In order to maintain the luster of the decorative surface of the ceramics for decorative component of the present invention, the mean crystal grain size is preferably not less than 1 µm nor more than 10 µm. The mean crystal grain size can be determined by the following procedure. On an image of a rupture surface captured with magnification factor of 1,000 times to 3,000 times by a scanning electron microscope, eight straight lines of the same length are drawn in an area of 86 to 110 µm by 65 to 92 µm. Counting the number of crystal grains lying on the eight straight lines, and dividing this number by the total length of the lines give the mean crystal grain size. Length of one line may be set to 80 µm when the magnification factor is 1,000 times, or 27 µm when the magnification factor is 3,000 times.

The decorative component for watch of the present invention is formed from the ceramics for decorative component of the present invention that has the constitution described above, and may be used in watch case or links of watch band.

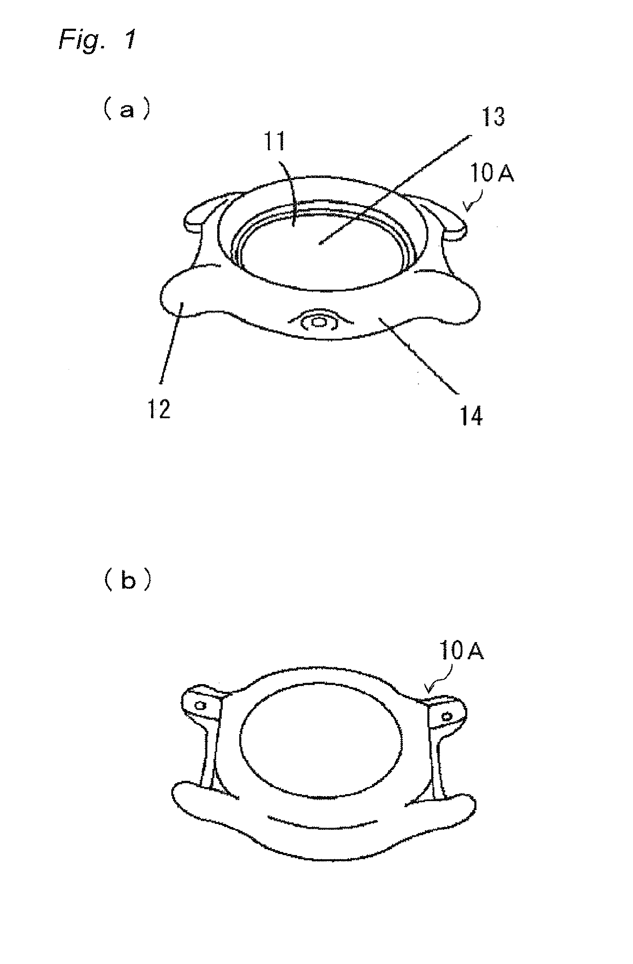

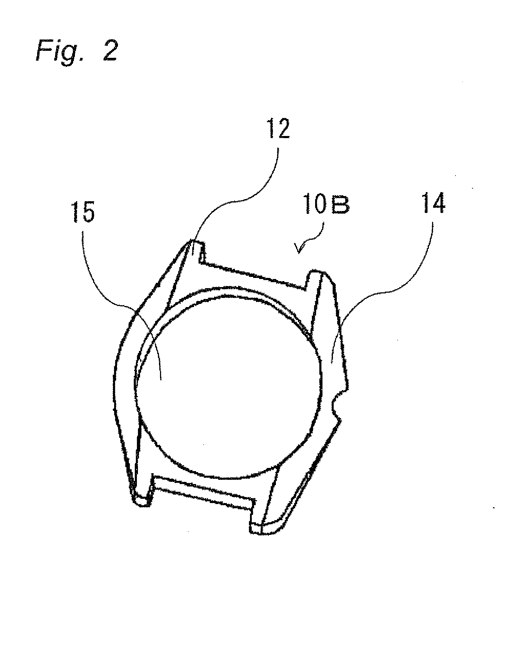

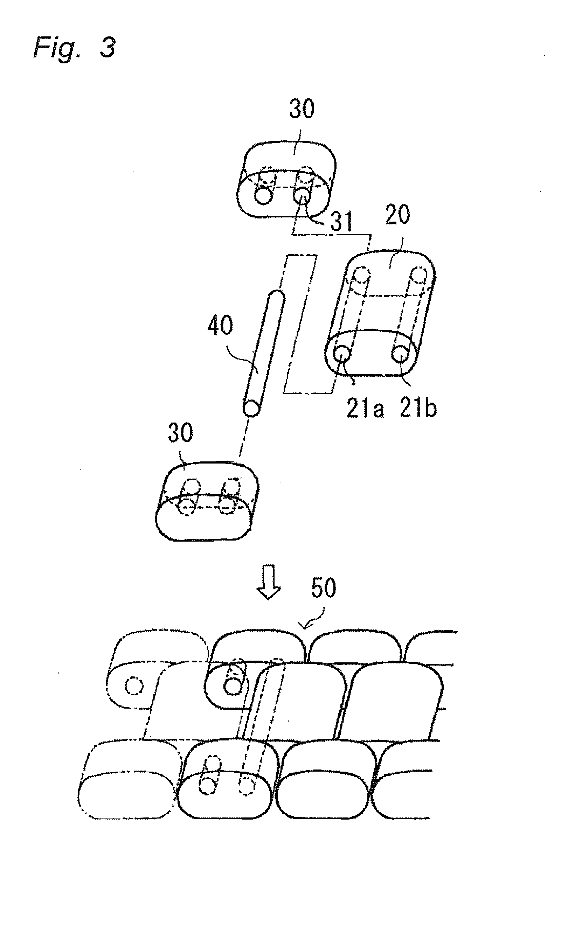

Fig. 1 shows an example of watch case which is a decorative component for watch of the present invention, Fig. 1(a) in a perspective view of the front surface of the watch case, and Fig. 1(b) is a perspective view of the back surface of the watch case of Fig. 1(a). Fig. 2 is a perspective view showing another example of the watch case which is the decorative component for watch of the present invention. Fig. 3 is a schematic diagram showing an example of constitution of the watchband as an application of the decorative component of watch of the present invention. Identical members are denoted with the same reference numeral in these drawings.

A watch case 10A shown in Fig. 1 has a recess 11 that houses a movement (drive mechanism, not shown), and lag 12 which engage a watchband (not shown) for wearing the watch on a wrist, where the recess 11 is constituted from a thin bottom 13 and a thick case body 14. The watch case 10B shown in Fig. 2 has a recess 15 that accommodates a movement (drive mechanism, not shown), and lag 12 provided on the case body 14 for engaging a watchband (not shown) so as to wear the watch on a wrist.

The links that constitute the watchband 50 shown in Fig. 3 include inner links 20 each having through hole 21 into which a pin 40 is inserted and outer links 30 which are disposed to sandwich the inner link 20 and each having pin holes 31 in which the ends of the pin 40 are inserted. The inner link 20 and the outer links 30 are linked with each other by inserting the pin 40 into the through hole 21 of the inner link 20, and engaging both ends of the inserted pin 40 in the pin holes 31 of the outer links 30, thereby to assemble the watchband 50.

The decorative components for watch of the present invention used in the watch cases 10A, 10B and the links that constitute the watchband 50 are formed from the ceramics for decorative component of the present invention, and therefore provide high-grade impression and aesthetic satisfaction for watch, and achieves mind soothing effect through visual sense.

The ceramics for decorative component of the present invention preferably has Vickers hardness (Hv) of not less than 8 GPa on the decorative surface, since the level of Vickers hardness (Hv) of the decorative surface is one of factors that affect the long-term reliability. When the surface has Vickers hardness (Hv) of not less than 8 GPa, the decorative surface is less likely to be mechanically impaired even when put into contact with hard substances such as glass or metallic particles. Vickers hardness (Hv) of the decorative surface may be measured in accordance with JIS R 1610-2003.

It is preferable that the decorative surface has higher rupture toughness, since rupture toughness affects the wear resistance of the decorative surface. The ceramics for decorative component of the present invention preferably has rupture toughness of not less than 4 MPa·m^{1/2}. The rupture toughness may be measured in accordance with indentation-fracture method (IF method) specified in JIS R 1607-1995.

In case the ceramics for decorative component is applied to an article that is worn by a person, the lighter the weight, the more it is preferred. Therefore, it is preferable that apparent density of the ceramics for decorative component of the present invention is not more than 6 g/cm³ (excluding 0). The apparent density may be measured in accordance with JIS R 1634-1998. When the ceramics for decorative component is used to form the inner links 20 that are part of the watchband links, the inner links 20 are frequently subjected to tensile load. Therefore, it is preferable that the ceramics for decorative component of the present invention has tensile strength of not less than 196 N (Newton). Tensile strength may be measured by inserting pins (not shown) that is made of a cemented carbide and is longer than the through hole 21 into the through holes 21a, 21b of the inner link 20, pulling the pin in the opposite direction and reading the load applied when the inner links 20 is ruptured on a load cell. When the ceramics for decorative component is used to form a watch case or watchband links, it is preferable that the ceramics for decorative component contains not more than 0.1% by mass of ferromagnetic metal such as cobalt (Co) that has mass susceptibility of not less than 162 G·cm³/g, when adverse effect to the movement (drive mechanism) that is not shown is taken into consideration. Concentration of the ferromagnetic metal can be determined by ICP (inductivity coupled plasma) fluorescence spectroscopy.

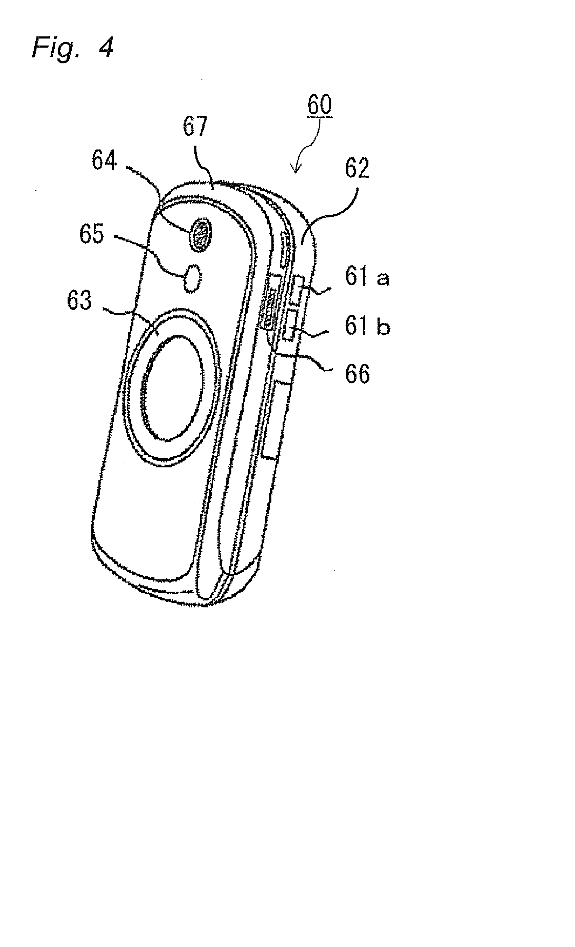

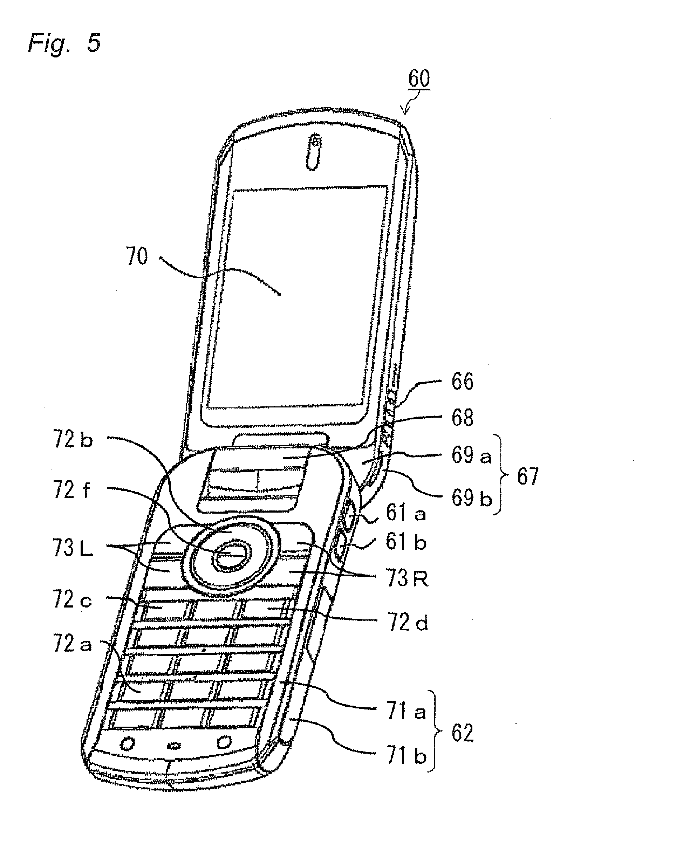

Fig. 4 is a perspective view showing an example of mobile phone that uses a decorative component for mobile terminal of the present invention. Fig. 5 is a perspective view showing the mobile phone shown in Fig. 4 in a state of chassis opened.

It is preferred that the decorative component for mobile terminal of the present invention is formed from the ceramics for decorative component of the present invention, and specific examples thereof include control keys and case shown in Figs. 4 and 5.

The mobile phone 60 of the example shown in Fig. 4 has a mode key 61a for changing the operation mode of the mobile phone 60 between radio mode for listening to radio broadcast, music mode for listening to music and the like, and a silencer key 61b for putting the mobile phone 60 into silent mode which are provided on a first chassis 62, and has a touch sensor 63 for entering commands by touching a finger or other object thereon, a camera 64 for capturing an image, a light 65 and a slide switch 66 for enabling or disabling the entry through the touch sensor 63 and the like provided on a second chassis 67.

Fig. 5 shows an example of the mobile phone 60 in a state where the second chassis 67 is opened. The first chassis 62 and the second chassis 67 are linked to each other via a hinge 68, so that the second chassis 67 can be freely opened. The second chassis 67 has a front case 69a and a rear case 69b, while a liquid crystal display 70 is provided on the front case 69a.

The first chassis 62 also comprises a front case 71a and a rear case 71b, while various control keys are provided on the front case 71a. The control keys include numeral keys 72a for entering telephone numbers, cursor keys 72b for moving the cursor over a menu of various functions, a talk key 72c to be pressed to start talking when receiving a call, a power/hang up key 72d for turning the power on or off and hanging up the line to end talking, function keys 73L, 73R disposed on the left and right sides of a center key 72f which is disposed at the center of the cursor key 72b, etc.

When at least one of the front cases 69a and 71a, the rear cases 69b and 71b, the numeral keys 72a, the cursor keys 72b, the talk key 72c, the power/hang up key 72d, the center key 72f, the function keys 73L and 73R, etc. is formed from the ceramics for decorative component of the present invention, high-grade impression, aesthetic satisfaction and mind soothing effect are provided to the user over a long period of time. Also because the ceramics for decorative component of the present invention has favorable property for color coordination, it is capable of satisfying the requirements of diverse users by combining with members of various color tones.

The mobile phone has been described as an example of mobile terminals. However, application of the present invention to mobile terminal is not limited to the mobile phone. The present invention can be applied to various portable information terminals of which components are required to have decorative value, such as portable information terminal (PDA), portable navigation system and portable audio player.

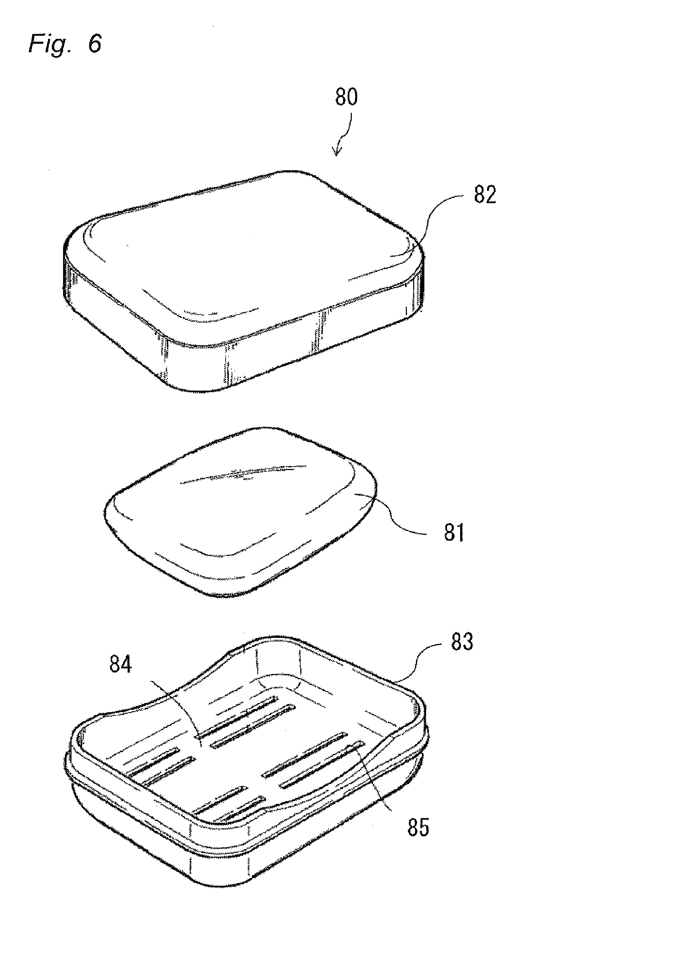

Fig. 6 is a schematic diagram showing an example of constitution of a soap case as an application of the decorative component for daily life articles of the present invention.

The soap case 80 comprises a case body 83 and a cap 82, wherein a soap placing surface 84 of the case body 83 whereon a soap 81 is to be placed has draining slits 85 for draining water carried by the soap 81 formed therein. When the soap 81 is not used, the soap 81 is placed on the soap placing surface 84, and the cap 82 is put onto the case body 83. When the soap 81 is used, the cap 82 is removed from the case body 83 and the soap 81 is taken out. By placing the soap 81 on the soap placing surface 84 of the case body 83 after use, water carried by the soap 81 can be drained through the drain slits 85, so as to prevent the soap 81 from being soaked with water.

By forming the cap 82 or the case body 83 of the soap case 80 from the ceramics for decorative component of the present invention, it is made possible to provide many users with the joy of possessing it and gives high-grade impression, aesthetic satisfaction and mind soothing effect through visual sense.

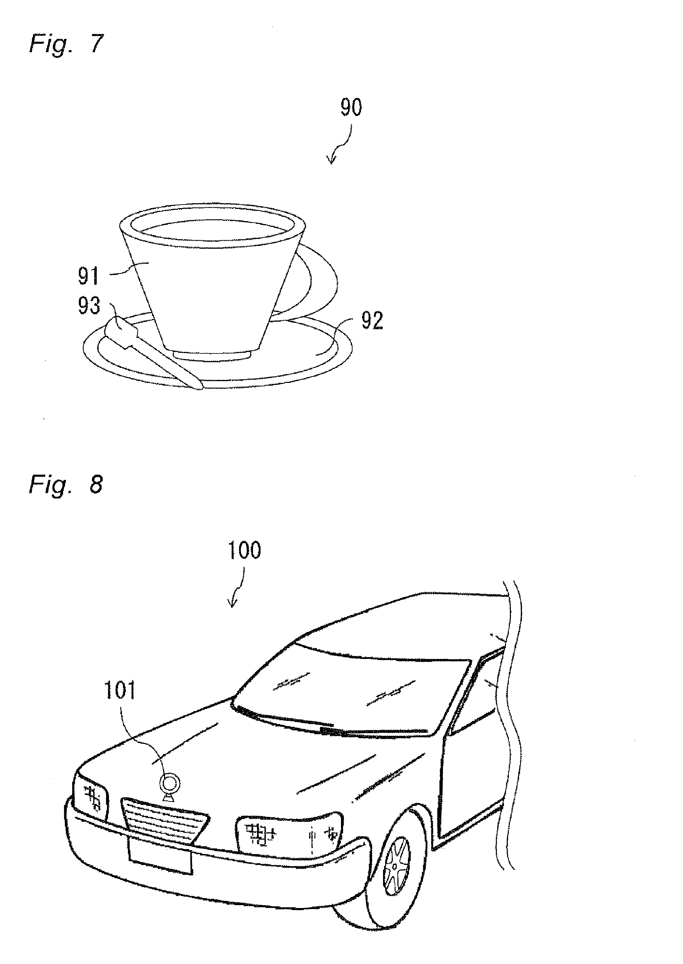

Fig. 7 is a perspective view showing an example of constitution of a coffee cup set as an application of the decorative component for daily life articles of the present invention.

The coffee cup set 90 shown in Fig. 7 includes a coffee cup 91, a saucer 92 and a spoon 93. By forming the coffee cup 91, the saucer 92 and the spoon 93 from the ceramics for decorative component of the present invention, it is made possible to provide many users with the joy of possessing it and gives high-grade impression, aesthetic satisfaction and mind soothing effect through visual sense during use.

Since the ceramics for decorative component of the present invention has favorable property for color coordination, at least one of the coffee cup 91, the saucer 92 and the spoon 93 may be formed from the ceramics for decorative component of the present invention, and can also be used in combination with other members having different color tones.

The decorative component for daily life articles of the present invention can be preferably applied to, in addition to the soap case 80 and the coffee cup set 90, the handle of tooth brush or shaver, earpick, scissors and other decorative component for daily life articles. By furnishing the bath rooms and toilet rooms of a luxury hotel with toiletry goods formed from the ceramics for decorative component of the present invention and marked with logos, it is made possible to provide high-grade impression, aesthetic satisfaction and mind soothing effect, spiced with excitement of being cut off from the ordinary lives.

Fig. 8 is a perspective view showing an example of vehicle having the decorative component for vehicle parts of the present invention mounted thereon.

The vehicle body 100 shown in Fig. 8 has an emblem 101 which is decorative component for vehicle parts. By forming the emblem 101 from the ceramics for decorative component of the present invention, it is made possible to provide the user with high-grade impression, aesthetic satisfaction and mind soothing effect through visual sense, and improve the decorative value of the vehicle body 100. While Fig. 8 shows the emblem 101 that is mounted on the front of the vehicle body 100, decorative value of the vehicle body 100 can be improved also by attaching the emblem 101 formed from the ceramics for decorative component of the present invention that shows the manufacturer's name or the model name, on the rear of the vehicle body 100.

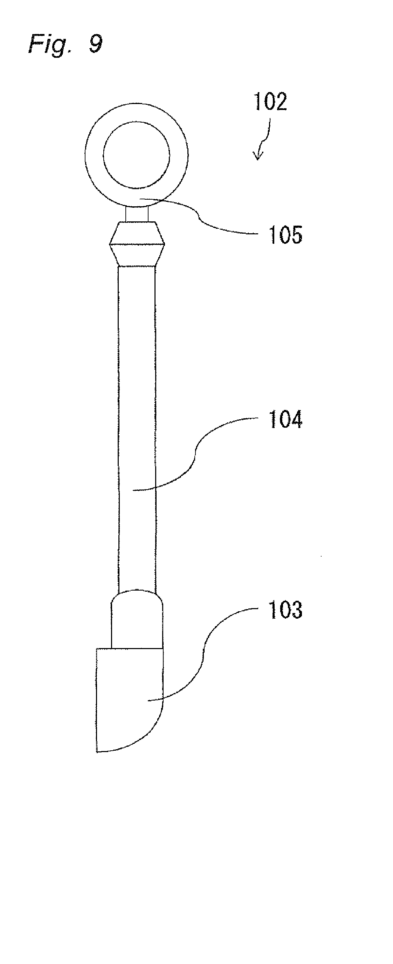

Fig. 9 is a front view showing an example of corner pole that uses the decorative component for vehicle parts of the present invention.

The corner pole 102 shown in Fig. 9 is installed so as to mark the left front corner of the vehicle (in the case of a right-hand drive vehicle) which is difficult to see from the driver seat when moving in or out of a parking lot, and comprises a mount 103 to be fastened onto the vehicle body, a pole 104 and a lighting unit 105 consisting of LED or the like. It is preferred to form the pole 104 of the corner pole 102 from the ceramics for decorative component of the present invention, or mounting the emblem formed from the ceramics for decorative component of the present invention instead of the lighting unit 105, so as to improve decorative value of the vehicle body as well as of the corner pole 102.

In addition to the emblem 101 and the corner pole 102, the decorative component for vehicle parts of the present invention may be applied to a part of wheel cap, a part of hood ornament mounted on the bonnet of the vehicle body, small articles and accessories installed within the vehicle or a part thereof, with favorable effect of improving the decorative value.

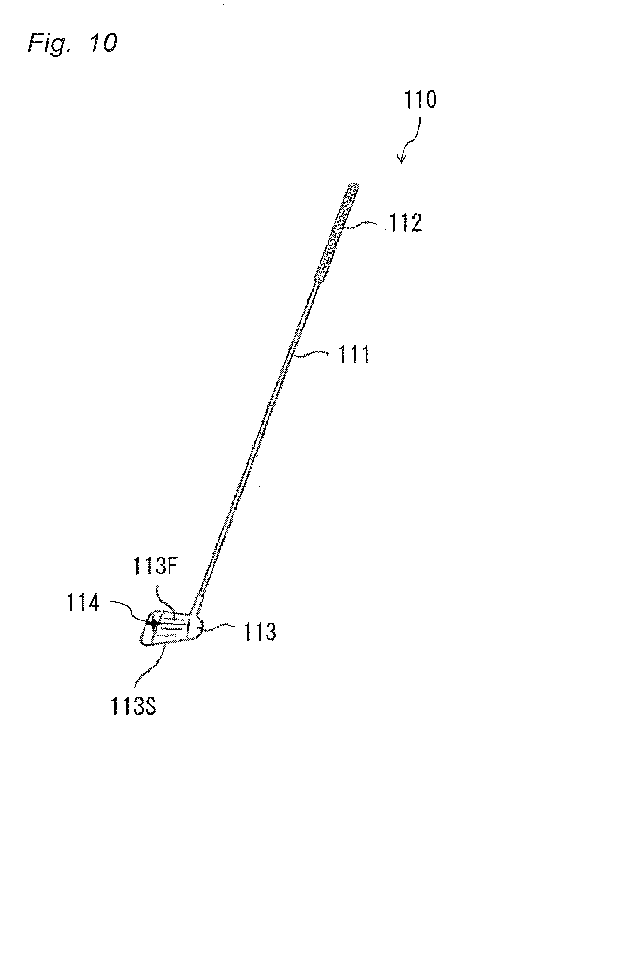

Fig. 10 is a front view showing an example of golf club that uses the decorative component for sports goods of the present invention.

The golf club 110 shown in Fig. 10 has a shaft 111, a grip 112 attached to one end of the shaft 111 and a head 113 attached to the other end of the shaft 111. The head 113 has an impact face 113F that hits a golf ball, and a sole surface 1135 that touches the ground. It is preferred to embed an accessory 114 formed from the ceramics for decorative component of the present invention in the impact face 113F, as shown in Fig. 10, which improves the decorative value.

In addition to the impact face 113F, the accessory 114 formed from the ceramics for decorative component of the present invention may also be preferably embedded in the sole surface 113S or the grip 112.

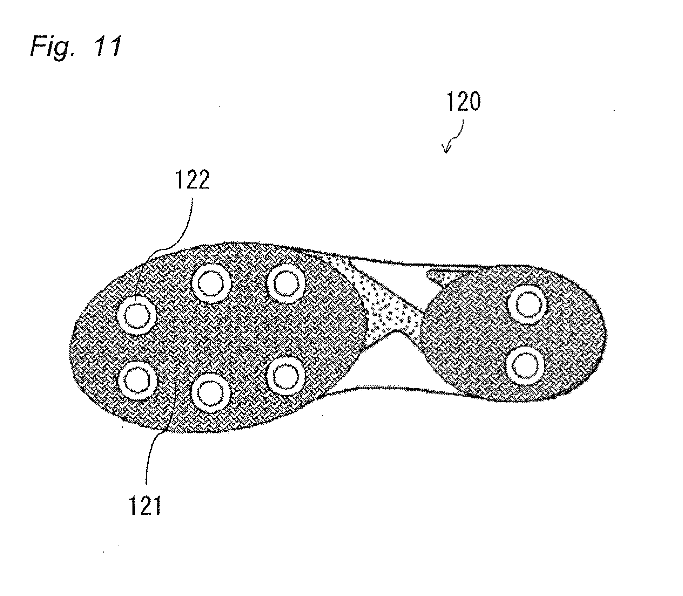

Fig. 11 is a bottom view showing an example of spike shoes that uses the decorative component for sports goods of the present invention.

The spike shoes 120 shown in Fig. 11 are worn by, for example, soccer or rugby players, and has a plurality of studs 122 planted in sole 121 to protrude therefrom so as to stabilize a pivot foot when kicking a ball. The studs 122 formed from the ceramics for decorative component of the present invention have the effects of, besides the improvement in decorative value, higher wear resistance than that of studs made of aluminum alloy that have been used, so as to decrease the frequency of replacement of the studs 122 and thereby reducing the cost incurred from the replacement. The studs 122 may be covered by a transparent resin to prevent the studs 122 from being chipped during a game.

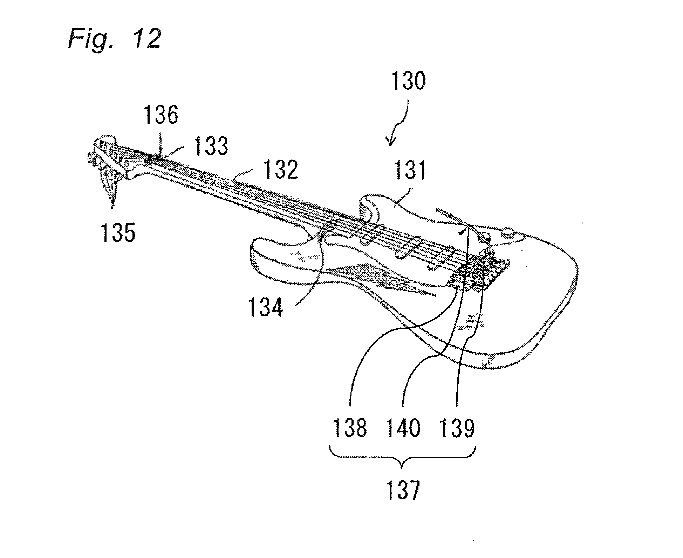

Fig. 12 is a perspective view showing an example of guitar that uses the decorative component for musical instrument of the present invention.

The guitar 130 shown in Fig. 12 consists mainly of a body 131 and a neck 132 that extends from the body 131. Disposed near the distal end of the neck 132 is a nut 133, and a tuning peg 135 is provided beyond the nut 133 for each of strings 134 for adjusting the tension of the string 134.
A clamp mechanism 136 is provided near the nut 133 so as to hold the strings 134 stationary with respect to the nut 133.

The body 131 has a tremolo arm 137 for producing sound effect by increasing or decreasing the tensions of the strings 134 at the same time. The tremolo arm 137 includes a base plate 138 that is attached to the body 131, a bridge saddle 139 that is held on the base plate 138 and holds the strings 134 in tunable state, and a tremolo bar 140 that actuates the tremolo arm. By forming the base plate 138 of this guitar 130, the bridge saddle 139, the tremolo bar 140 or the like from the ceramics for decorative component of the present invention, it is made possible to improve the decorative value of the guitar 130. This provides the joy of possessing the guitar 130 and helps captivate a large audience.

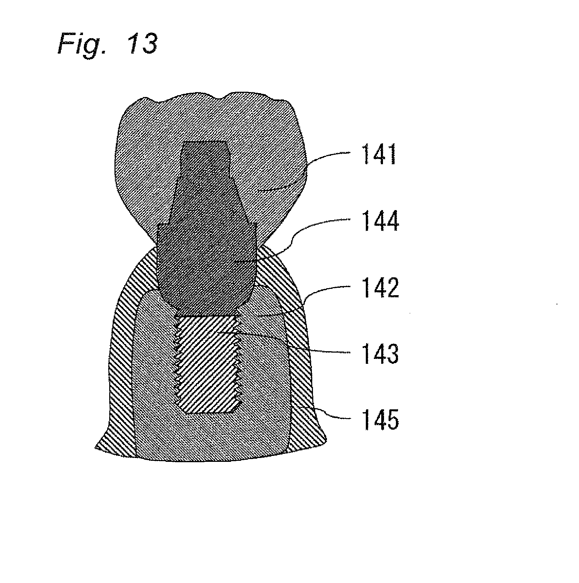

Fig. 13 is a schematic diagram showing an example of artificial dental crown that uses the decorative component for accessory of the present invention.

The schematic diagram of Fig. 13 shows an artificial dental crown 141 attached onto an abutment 144 that is fastened onto an artificial dental root (implant) 143 which is embedded in a jaw bone 142 within a gingival 145. When the artificial dental crown 141 is formed from the ceramics for decorative component of the present invention, the tooth shines in golden color which gives enthusiastic feeling to users who like decorating their teeth.

The artificial dental root 143 embedded in the jaw bone 142 is formed in the shape of screw. A hard bond layer may be formed, on the portion that is formed in the shape of screw, from a biodegradable material that contains at least one kind selected from among chitin, collagen and derivatives thereof that have capability to induce the generation of new bone. Base of the abutment 144 may have a soft bond layer formed from the biodegradable material that is linked, so as to make contact with the gingival 145 located over the jaw bone 142.

The ceramics for decorative component of the present invention is formed from titanium nitride-based sintered material, and is therefore biocompatible. It is preferable to make use of this advantage through application to the artificial dental root 143 and the abutment 144, as well as the artificial dental crown 141.

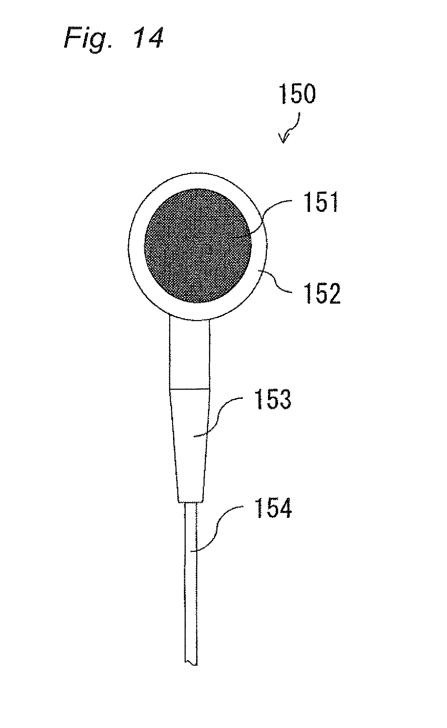

Fig. 14 is a front view showing an example of earphone unit that uses the decorative component for accessory of the present invention.

The earphone unit 150 shown in Fig. 14 comprises a speaker 151 that is inserted into the ear of the listener to produce sound waves, a case 152 that houses the speaker 151 and a cord that feeds electric signals to the speaker 151 via a lead 153 that is in contact with the case 152.

By forming the case 152 of the earphone unit 150 from the ceramics for decorative component of the present invention, it is made possible to provide the decorative component for accessory that improves the decorative value, and provides many users with high-grade impression, aesthetic satisfaction and mind soothing effect through visual sense.

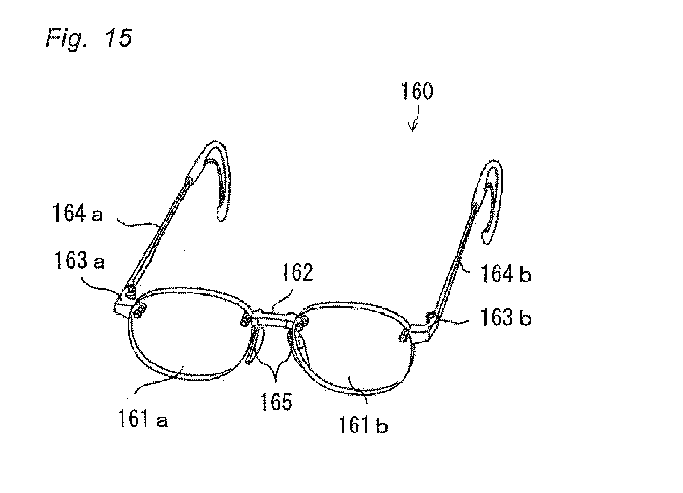

Fig. 15 is a perspective view showing an example of eyeglass frame that uses the decorative component for accessory of the present invention.

The eyeglasses 160 shown in Fig. 15 comprises a pair of lenses 161a, 161b that provide vision correction or protection of eyes against ultraviolet rays, a bridge 162 that links the pair of lenses 161a, 161b together, hinges 163a, 163b that connect to the respective lenses 161a, 161b, temples 164a, 164b that connect to the hinges 163a, 163b so as to be capable of swiveling, and a nose pad 165 attached via nose pad link members to the lenses 161a, 161b, respectively.

By forming at least the bridge 162, the temples 164a, 164b and the nose pad 165 of the eyeglasses 160, it is made possible to provide the decorative component for accessory that improves the decorative value, and provides many users with high-grade impression, aesthetic satisfaction and mind soothing effect through visual sense.

The method of manufacturing ceramics for decorative component of the present invention will be described below.

In order to obtain ceramics for decorative component of the present invention, first, specified amounts of powders of titanium nitride that becomes the main component of the sintered material, nickel, niobium, chromium and carbon are weighed, crushed and mixed to prepare the stock material. More specifically, a powder of titanium nitride having a mean particle size of 10 to 30 µm, a powder of nickel having a mean particle size of 10 to 20 µm, a powder of niobium having a mean particle size of 20 to 50 µm and a powder of carbon having a mean particle size of 0.1 to 10 µm are prepared. 7 to 14.5% by mass of a nickel powder, 2.5 to 10% by mass of a niobium powder, 1.5 to 6.5% by mass of a chromium powder and 0.5 to 0.9% by mass of a carbon powder, with the rest being a titanium nitride powder, may be weighed, crushed and mixed. The time required for crushing and mixing (hereinafter referred to as the crushing and mixing time) may be not less than 72 hours.

To form the crystal grain boundary phase that bonds titanium nitride in the state of nickel atoms surrounding chromium atoms, it is necessary to increase the probability of a nickel powder and a chromium powder making contact with each other. The probability can be increased by increasing the crushing and mixing time, for example, the crushing and mixing time may be set to not less than 150 hours. The stock material to be prepared may contain silicon, phosphorus, sulfur, manganese, iron, etc. as inevitable imparities, although these elements can have adverse effect on the color tone of the decorative surface and therefore it is preferable that concentration of each of these elements is less than 0.5% by mass.

The titanium nitride powder may be either TiN of stoichiometrical composition, or TiN₁₋ₓ (0 < x < 1) of non-stoichiometrical composition. In view of high wear resistance and a color tone which has high decorative value, purity of each of the powders is preferably not less than 99%. There arises no problem if a part of the titanium nitride powder reacts with the nickel powder thereby forming a small amount of TiNi. To form the titanium nitride-based sintered material that forms the ceramics for decorative component and has composition of TiNₓ with x satisfying 0.8 ≤ x ≤ 0.96, titanium nitride having composition of TiNₓ with x satisfying 0.7 ≤ x ≤ 0.9 may be used.

The stock material is mixed with an organic solvent, for example isopropyl alcohol, and crushed in a mill. With a predetermined quantity of paraffin wax added as a binder, the mixture is formed in a desired shape such as disk, plate, ring, etc. by dry pressure molding process, cold hydrostatic pressure molding process, extrusion molding process or the like.

In case the dry pressure molding process is employed, it is preferable to set the molding pressure in a range from 49 to 196 MPa, since the molding pressure has an influence on the open void ratio and the Vickers hardness (Hv) of the decorative surface. Setting the molding pressure in a range from 49 to 196 MPa makes it possible to make a sintered material having relative density of not less than 95%, open void ratio of not more than 2.5% and Vickers hardness (Hv) of not less than 8 GPa. It also elongates the service life of dies.

The green compact thus obtained is degreased in a non-oxidizing atmosphere such as nitrogen atmosphere or inert gas atmosphere, as required. The green compact is then fired in an atmosphere of at least one of nitrogen and inert gas or in vacuum, thereby to obtain a sintered material having relative density of not less than 95%. The green compact is fired and sintered in an atmosphere of at least one of nitrogen and inert gas or in vacuum because, when fired in oxidizing atmosphere, titanium is oxidized with most thereof turning into titanium oxide TiO₂ of which natural white color causes the ceramics for decorative component to have whitish color.

In case the ceramics for decorative component is obtained by firing in vacuum, the pressure is preferably not more than 1.33 Pa. When the pressure is set to not more than 1.33 Pa, titanium is not oxidized during firing and therefore the ceramics for decorative component having golden color tone is obtained. Furthermore, the firing temperature is preferably not lower than 1,200°C nor higher than 1,800°C, thus making it possible to make a sintered material having relative density of not less than 95% and open void ratio of not more than 2.5% with lower cost of firing.

In order to make titanium nitride-based sintered material having thermal conductivity of not less than 22 W/(m·K), total content of lithium, sodium, potassium, iron, calcium, magnesium, strontium, barium, manganese and boron, that cause thermal conductivity to decrease, may be controlled to not more than 0.3% by mass relative to the titanium nitride powder. In contrast, in order to make the titanium nitride-based sintered material having thermal conductivity of not more than 26 W/(m·K), firing temperature is set to not lower than 1,200°C nor higher than 1,550°C since growth of crystal grains must be suppressed.

The surface of the sintered body which is required to have decorative value is lapped on a lapping machine, followed by barrel polishing process. This operation produces the decorative surface having golden color tone, thereby providing the ceramics for decorative component of the present invention. It is preferable that voids that open in the decorative surface are controlled so that the maximum width of the opening is not more than 30 µm. By controlling the size of opening within this range, entry of bacteria, polluting material and other foreign matter into the voids can be suppressed.

In case the product formed from the ceramics for decorative component has a complicated shape, the material may be first formed in a block or other convenient shape which resembles the product shape by dry pressure molding process, cold hydrostatic pressure molding process, extrusion molding process, injection molding process or the like, with the resultant green compact being sintered, ground into the product shape and finished by lapping and barrel polishing. Alternatively, the material may be formed directly into the product shape by injection molding process, with the resultant green compact being sintered and subjected to lapping and barrel polishing.

The arithmetic mean height Ra of the decorative surface can be controlled to not more than 0.03 µm, through lapping process by supplying a diamond abrasives having small mean particle size onto a lapping stage made of tin. For example, diamond abrasive having a mean particle size of not more than 1 µm may be used. In the barrel polishing process, a rotary barrel polishing machine may be used with a polishing medium made of green carborundum (GC) charged into the rotary barrel polishing machine so as to carry out wet polishing operation for 24 hours.

The ceramics for decorative component of the present invention obtained as described above has such a type of golden color that is highly evaluated as especially beautiful color tone, that produces high-grade impression and aesthetic satisfaction, and therefore provides mind soothing effect through visual sense. Therefore the ceramics for decorative component can be preferably used as decorative component of watch such as watch case and links of watchband, decorative components of mobile terminal such as control keys that are operated by pressing and case, decorative component for daily life articles such as soap case, coffee cup set, knife, fork, handles of tooth brush and shaver, earpick, scissors, seal or name card, decorative component for vehicle parts such as emblem representing manufacturer's name or model name, corner pole, etc., decorative component for sports goods for decorating golf club or spike shoes, decorative component for musical instrument for decorating guitar or the like, decorative component of accessory such as earphone, artificial dental crown, brooch, necklace, earring, ring, bracelet, anklet, necktie pin, tie tack, medal, button, etc., decorative component for architectural members such as tiles for decorating floor, wall or ceiling, door handle, etc., altar articles for religious practice and decorative component for home electric appliances. The ceramics for decorative component can also be preferably used as decorative component for mobile phone of wrist watch type that combines the functions of a watch and a mobile phone. Examples

The present invention will be described in detail below by way of Examples, but the present invention is not limited to these Examples.

### Example 1

First, a titanium nitride powder (purity 99%, mean particle size 22.3 µm), a nickel powder (purity 99.5%, mean particle size 12.8 µm), a niobium powder (purity 99.5%, mean particle size 33 µm), a chromium powder (purity 99.5%, mean particle size 55 µm) and a carbon powder (purity not less than 99%, mean particle size 0.5 µm) were weighed so as to set a ratio (content) in the sintered body to that shown in Table 1, crushed and mixed so that the composition shown in Table 1 would be obtained in the state of sintered material.

Then, an isopropanol solution was added to the stock materials obtained, with the mixture charged into a vibration mill to be crushed and mixed for 72 hours. 3 parts by weight of paraffin wax as a binder was added to the stock materials and the mixture was dried and turned into granules by a spray drying method. The granules thus obtained were subjected to pressure molding under a pressure of 98 MPa to make a green compact. The green compact was degreased in nitrogen atmosphere at 600°C and then fired at 1,530°C for 2 hours, thereby to obtain a disk-shaped sintered body measuring 16 mm in diameter.

The sintered body was lapped on the surface thereof for one hour by supplying diamond abrasive having a mean particle size of 1 µm onto a lapping stage made of tin. Then the sintered body was put into a rotary barrel polishing machine together with water and a polishing medium made of green carborundum (GC) so as to carry out wet polishing operation for 24 hours. Thus samples Nos. 1 to 23 of the ceramics for decorative component formed from titanium nitride-based sintered material were obtained.

Contents of nickel, niobium and chromium that constitute the samples were measured by using a fluorescence X-ray analysis (XRF) instrument, while the carbon content was measured by using a carbon analyzer. The arithmetic mean height Ra of the decorative surface was measured at five points in accordance with JIS B 0601-2001 using a touch probe type surface roughness meter with the measurement length being set to 5 mm, the cut-off point set to 0.8 mm, the probe tip radius set to 2 µm and scanning speed of the probe being set to 0.5 mm/sec, and the mean value was calculated. Furthermore, fracture toughness K_{1c} was measured in accordance with indentation-fracture method (IF method) specified in JIS R 1607-1995 and the hardness was measured in accordance with JIS R 1610-2003. Specifically, Vickers hardness Hv (this will be referred to simply as hardness hereinafter) was measured at five points of the decorative surface, and the measurements were averaged.

Lightness index and chromaticness indices of each sample were measured in accordance with JIS Z 8722-2000, using a spectrocolorimeter (CM-3700d from Konica Minolta Holdings Inc., etc.) in combination with CIE standard light source of D65 with view angle being set to 10 degrees and the measurement area being set to 3 mm by 5 mm.

The color tone was evaluated by 40 monitors consisting of 5 male and 5 female monitors in each age brackets from 20s to 50s, by responding to questionnaire asking how they felt about 3 aspects of quality; high-grade impression, aesthetic satisfaction and mind soothing effect. It was decided that the sample was "Excellent" when not less than 90% of the monitors responded positively for any of the high-grade impression, aesthetic satisfaction and mind soothing effect, "Good" when the proportion was 80% for at least one of the three aspects of quality, and "Poor"' when the proportion was not more than 70% for at least one of the three aspects of quality. Sample No.4 that was positively evaluated for any of the high-grade impression, aesthetic satisfaction and mind soothing effect was used as the standard sample. Color difference of each sample from sample No. 4 was calculated with the formula (A) described previously.
The results are shown in Table 1.

**Table 1**

| Sample NO. | Ni (% by mass) | Nb (% by mass) | Cr (% by mass) | C (% by mass) | Mean value of arithmeticmean height Ra (µm) | Rupture toughness (Mpa√m) | Hardness (GPa) | Lightness index L* |
|---|---|---|---|---|---|---|---|---|
| *1 | 9 | 8 | 2 | 0.1 | 0.021 | 3.1 | 9.2 | 65 |
| *2 | 9 | 8 | 2 | 0.3 | 0.028 | 4.4 | 9.4 | 67 |
| 3 | 9 | 8 | 2 | 0.5 | 0.027 | 5 | 10.3 | 75 |
| 4 | 9 | 8 | 2 | 0.7 | 0.028 | 5.7 | 10.3 | 78 |
| 5 | 9 | 8 | 2 | 0.9 | 0.024 | 6 | 10.6 | 75 |
| *6 | 9 | 8 | 2 | 1.2 | 0.025 | 6.5 | 11 | 71 |
| 7 | 19.5 | 10 | 2 | 0.5 | 0.025 | 6.8 | 10 | 77 |
| 8 | 17.5 | 10 | 2 | 0.5 | 0.026 | 6 | 10.5 | 82 |
| 9 | 8 | 5 | 2 | 0.5 | 0.025 | 5.3 | 10 | 77 |
| 10 | 6 | 2.5 | 2 | 0.5 | 0.029 | 5.4 | 10 | 72 |
| *11 | 0 | 8 | 2 | 0.5 | 0.027 | 5.1 | 9.5 | 61 |
| 12 | 5 | 8 | 2 | 0.5 | 0.028 | 6 | 9.9 | 75 |
| 13 | 7 | 8 | 2 | 0.5 | 0.024 | 5.7 | 10 | 75 |
| 14 | 10 | 8 | 2 | 0.5 | 0.025 | 5.8 | 10.6 | 74 |
| 15 | 14.5 | 8 | 2 | 0.5 | 0.030 | 6 | 10.9 | 73 |
| 16 | 17 | 8 | 2 | 0.5 | 0.028 | 6.5 | 11.1 | 82 |
| *17 | 10 | 0 | 2 | 0.5 | 0.029 | 6.2 | 10.5 | 69 |
| 18 | 10 | 1 | 2 | 0.5 | 0.028 | 5.7 | 10.5 | 70 |
| 19 | 10 | 3 | 2 | 0.5 | 0.026 | 5.6 | 10.3 | 73 |
| 20 | 10 | 8 | 2 | 0.5 | 0.024 | 5 | 10.3 | 76 |
| 21 | 10 | 10 | 2 | 0.5 | 0.026 | 5.1 | 10.4 | 79 |
| 22 | 9 | 8 | 2 | 0.7 | 0.064 | 5.6 | 10.3 | 71 |
| 23 | 8 | 5 | 2 | 0.5 | 0.043 | 5.5 | 10.3 | 71 |

| Sample NO. | Chromaticness index a* | Chromaticness index b* | Color difference (ΔE*ab) | High-grade feeling (%) | Aesthetic satisfaction (%) | Mind soothing effect (%) | Evaluation | |
|---|---|---|---|---|---|---|---|---|
| *1 | 2 | 38 | 14.8 | 70 | 70 | 70 | Poor | |
| *2 | 2 | 37 | 12.7 | 80 | 80 | 70 | Poor | |
| 3 | 4 | 30 | 4.1 | 90 | 90 | 90 | Excellent | |
| 4 | 6 | 32 | - | 100 | 100 | 100 | Excellent | |
| 5 | 9 | 31 | 4.4 | 90 | 90 | 90 | Excellent | |
| *6 | 12 | 29 | 9.6 | 70 | 80 | 70 | Poor | |
| 7 | 3 | 24 | 8.6 | 90 | 90 | 80 | Good | |
| 8 | 9 | 26 | 7.8 | 80 | 80 | 80 | Good | |
| 9 | 5 | 31 | 1.7 | 90 | 90 | 90 | Excellent | |
| 10 | 7 | 33 | 6.2 | 100 | 90 | 90 | Excellent | |
| *11 | 10 | 26 | 18.5 | 50 | 50 | 50 | Poor | |
| 12 | 4 | 38 | 7 | 90 | 90 | 80 | Good | |
| 13 | 6 | 36 | 5 | 100 | 100 | 100 | Excellent | |
| 14 | 8 | 33 | 4.6 | 90 | 100 | 100 | Excellent | |
| 15 | 9 | 30 | 6.2 | 90 | 100 | 100 | Excellent | |
| 16 | 10 | 27 | 7.5 | 90 | 80 | 80 | Good | |
| *17 | 9 | 27 | 10.7 | 70 | 70 | 70 | Poor | |
| 18 | 7 | 28 | 9 | 80 | 90 | 90 | Good | |
| 19 | 7 | 32 | 5 | 90 | 100 | 90 | Excellent | |
| 20 | 5 | 30 | 3 | 90 | 90 | 90 | Excellent | |
| 21 | 4 | 28 | 4.6 | 90 | 90 | 90 | Excellent | |
| 22 | 4 | 26 | 9.4 | 80 | 80 | 90 | Good | |
| 23 | 5 | 27 | 8.7 | 80 | 90 | 90 | Good | |

| | | | | | | | | |
|---|---|---|---|---|---|---|---|---|
| Sample marked with * is out of the scope of the present invention. Color difference from sample No. 4 used as standard sample was calculated with the formula (A). Formula A: ((L* of evaluated sample - L* of sample No. 4)² + (a* of evaluated sample - a* of sample No. 4)² + (b* of evaluated samples - b* of sample No. 4)²)^{1/2} | | | | | | | | |

It can be seen from Table 1 that a sample that shows color difference (ΔE*ab) larger than 9.5 fails to provide the required decorative value for at least one of the three aspects of quality; high-grade impression, aesthetic satisfaction and mind soothing effect. Samples Nos. 1 and 2 that were out of the scope of the present invention had carbon concentration less than 0.5% by mass that resulted in low rupture toughness and low hardness, and showed large color difference (ΔE*ab) from sample No. 4 used as the standard sample. Sample No. 6 that had carbon concentration more than 0.9% by mass and therefore showed high rupture toughness and high hardness, but had high chromaticness index a* and therefore did not produce the required decorative value and failed to satisfy the monitors.

Sample No. 11, in which nickel content which serves as a binder that bonds the crystal grains of titanium nitride was 0% by mass, had portion that remained without being sintered, and could not be used for decorative component. Sample No. 17, in which niobium content was 0% by mass, did not produce the required decorative value and failed to satisfy the monitors.

Samples Nos. 3 to 5, 7 to 10, 12 to 16 and 18 to 23 of the invention included carbon content of not less than 0.5% by mass nor more than 0.9% by mass, and produced the required decorative value and were able to satisfy the monitors. Samples Nos. 3 to 5, 7 to 10, 12 to 16 and 18 to 23 of the invention also showed black hue produced by carbon that had the effect of making the color a little achromatic so as to suppress color unevenness from occurring, thereby keeping the color difference (ΔE*ab) from sample No. 4 at a small level. As a result, almost no difference was recognized in color tone among the decorative components.

In particular, samples Nos. 3 to 5, 9, 10, 13 to 15 and 19 to 21 of the invention, that showed the arithmetic mean height Ra of the decorative surface of not more than 0.03 µm, the lightness index L* of not less than 72 nor more than 84, chromaticness indices a* and b* not less than 3 not more than 9 and not less than 27 nor more than 36, respectively, in the L*a*b* color space, and therefore had high reflectivity of the decorative surface to light. This resulted in enhanced luster, and not less than 90% of monitors positively evaluated high-grade impression, aesthetic satisfaction and mind soothing effect, showing that most of the monitors were satisfied.

### Example 2

Tests were conducted to investigate the changes in characteristics caused by the difference in the composition of the titanium nitride powder.
First, the titanium nitride powder of composition shown in Table 2 was prepared, and other materials were prepared with the same compositions as those used in Example 1. The materials were weighed so as to set a ratio (content) in the sintered body to that shown in Table 2, crushed and mixed so as to obtain the composition shown in Table 2 in the state of sintered material. Samples Nos. 24 to 28 of the ceramics for decorative component formed from titanium nitride-based sintered material were obtained by the method similar to that of Example 1.

Similar to Example 1, nickel, niobium, chromium and carbon contents, the arithmetic mean height Ra and color tones were measured, and evaluation was made on 3 aspects of quality; high-grade impression, aesthetic satisfaction and mind soothing effect, by responding to questionnaire. Sample No. 27 that was positively evaluated for any of the high-grade impression, aesthetic satisfaction and mind soothing effect was used as the standard sample. Color difference of each sample from sample No. 27 was calculated with the formula (A).

Furthermore, the value of atomicity x in the composition formula TiNₓ was determined as follows. Specifically, after measuring the contents of oxygen and nitrogen using an oxygen-nitrogen analyzer, titanium content was determined by subtracting the contents of oxygen, nitrogen and carbon from 100% by mass. Titanium content and nitrogen content divided by the respective atomic weights gave the number of moles of the respective elements contained. The ratio of the number of moles of nitrogen to the number of moles of titanium was taken as the value of atomicity x.

The results are shown in Table 2.

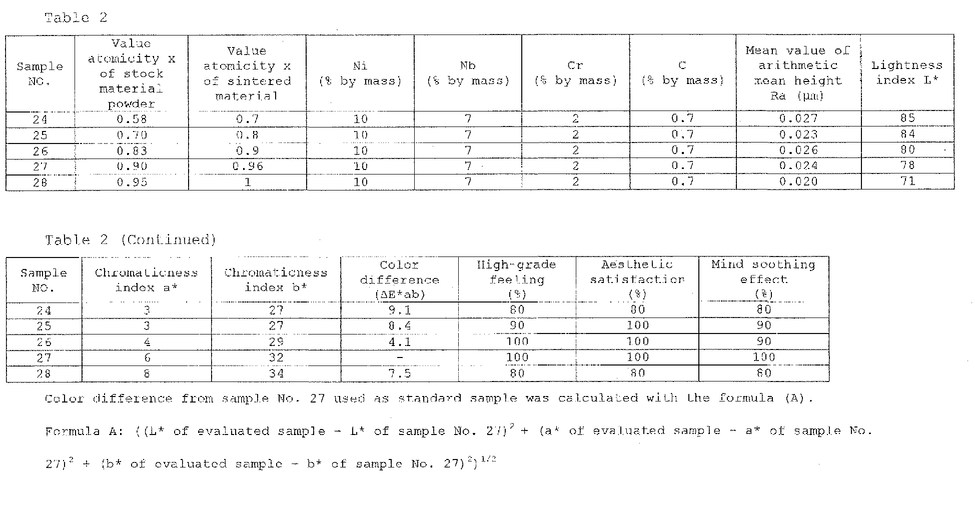

It can be seen from Table 2 that, compared to sample No. 24 that showed value of atomicity x of less than 0.8 and sample No. 28 that showed value of atomicity x of more than 0.96, samples Nos. 25 to 27 that showed value of atomicity x of not less than 0.8 nor more than 0.96 had enhanced color tone with luster, thus satisfying the monitors with high-grade impression, aesthetic satisfaction and mind soothing effect.

### Example 3

A test was conducted to investigate the changes in characteristics caused by the difference in the contents of Ni and Nb.
First, the titanium nitride powder used in sample No. 27 was prepared, together with other stock materials of the same composition as those used in Example 1. The stock materials were weighed so as to set a ratio (content) in the sintered body to that shown in Table 3, crushed and mixed so as to obtain the composition shown in Table 3 in the state of sintered material. Samples Nos. 29 to 40 of the ceramics for decorative component formed from titanium nitride-based sintered material were obtained by the method similar to that of Example 1.

Similar to Example 1, nickel, niobium, chromium and carbon contents, the arithmetic mean height Ra and color tones were measured, and evaluation was made on 3 aspects of quality; high-grade impression, aesthetic satisfaction and mind soothing effect, by responding to questionnaire, similarly to Example 1. Sample No. 27 of Example 2 that was positively evaluated for any of the three qualities of high-grade impression, aesthetic satisfaction and mind soothing effect was used as the standard sample. Color difference of each sample from sample No. 27 was calculated with the formula (A) described previously. The value of atomicity x was determined by the same calculation method as in Example 2. The results are shown in Table 3.

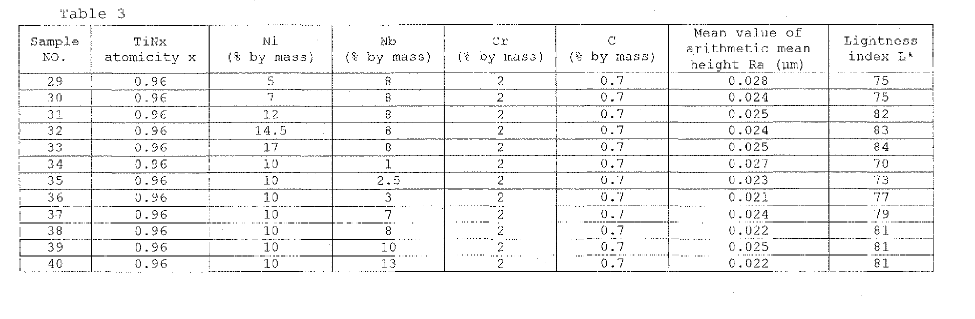

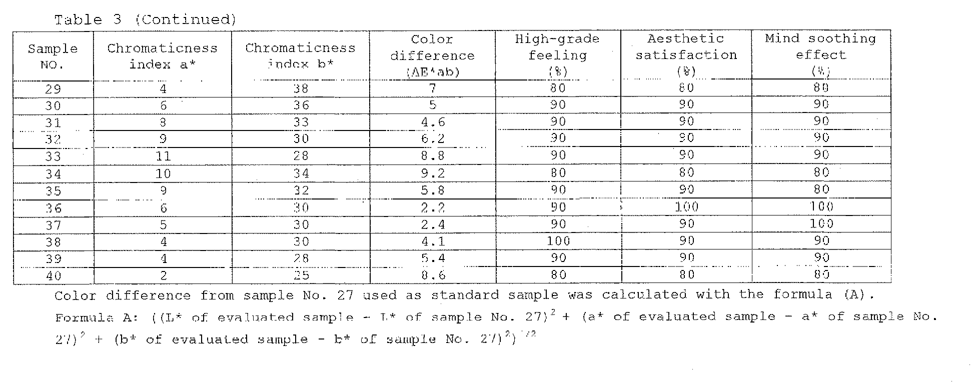

As is apparent from Table 3, samples Nos. 30 to 32, and 35 to 39 contained nickel with concentrations of not less than 7% nor more than 14.5% by mass, and niobium with concentrations of not less than 2.5% by mass nor more than 10% by mass, and showed the lightness index L* of not less than 72 nor more than 84, chromaticness indices a* and b* of not less than 3 nor more than 9, and not less than 27 nor more than 36, respectively. As a result, not less than 90% of monitors positively evaluated high-grade impression, aesthetic satisfaction and mind soothing effect, showing that most of the monitors were satisfied.

### Example 4

A test was conducted to investigate the changes in characteristics caused by the difference in Cr content.
First, the same stock materials as those used in Example 1 were prepared and were weighed so as to set a ratio (content) in the sintered body to that shown in Table 4, crushed and mixed so as to obtain the composition shown in Table 4 in the state of sintered material. Samples Nos. 41 to 46 of the ceramics for decorative component formed from titanium nitride-based sintered material were obtained by the method similar to that of Example 1.

Then, nickel, niobium, chromium and carbon contents, the arithmetic mean height Ra and color tones were measured similarly to Example 1. Among the corrosion resistance tests specified in JIS B 7001-1995, semi-immersion in artificial sweat test was conducted (leaving to stand at 40±2°C for 24 hours). After the test, color tone was measured on each of the samples, and the differences between the values of the lightness index L* and chromaticness indices a* and b* before and after the test were calculated.
The results are shown in Table 4.

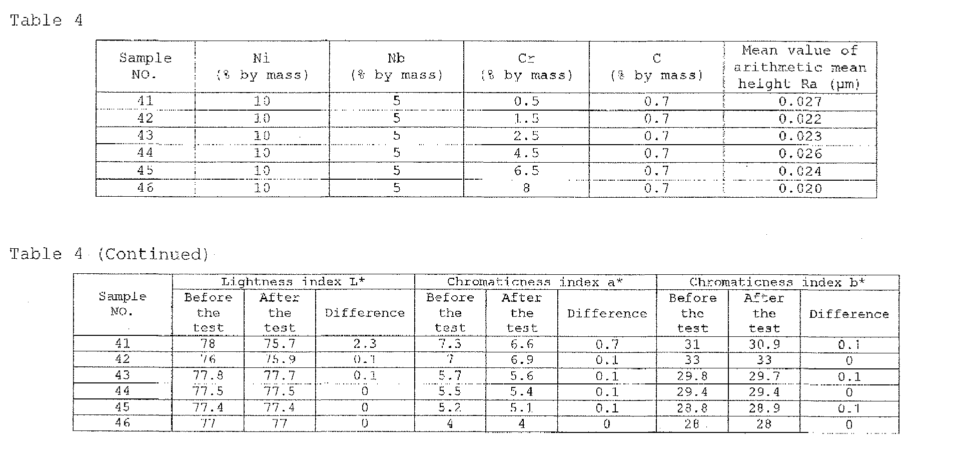

It can be seen from Table 4 that, compared to sample No. 41 that contained chromium with concentration of less than 1.5% by mass, samples Nos. 42 to 45 contained chromium with concentrations of not less than 1.5% by mass and therefore showed high corrosion resistance that was improved by the dense oxide film formed on the decorative surface through reaction with oxygen contained in the air. As a result, there were little differences between the values of the lightness index L* and chromaticness indices a* and b* before and after the test, thus demonstrating good corrosion resistance.

When chromium concentration exceeds 6.5% by mass, however, high corrosion resistance is obtained, although chromaticness indices a* and b* that indicate the clearness both decrease as can be seen from the case of sample No. 46. In order to achieve corrosion resistance and clearness at the same time, therefore, it is preferable to contain chromium with concentration of not less than 1.5% nor more than 6.5% by mass as shown in samples Nos. 42 to 45.

### Example 5

A test was conducted to investigate the changes in characteristics caused by the difference in open void ratio. First, the same stock materials as those used in Example 1 were prepared and were weighed so as to set a ratio (content) in the sintered body to that shown in Table 5, crushed and mixed so as to obtain the composition shown in Table 5 in the state of sintered material. Samples Nos. 47 to 50 of the ceramics for decorative component formed from titanium nitride-based sintered material were obtained by the method similar to that of Example 1 up to a stage prior to barrel polishing, while varying the duration of barrel polishing operation in order to check the influence of the open void ratio.

Then the open void ratio in the decorative surface was determined by capturing an image of the decorative surface with a CCD camera under a metallurgical microscope with a magnifying power of 200 times, and measuring the area of open voids in one field of view, with the measuring area of one field of view in the image being set to 2.2 × 10⁻² mm² and the number of fields of view being set to 20, and calculating the ratio of the area of open voids to the total measuring area of 4.5 × 10⁻¹ mm², using an image analyzer (LUZEX-FS manufactured by Nireco). Then nickel, niobium, chromium and carbon contents, the arithmetic mean height Ra and color tones were measured, and evaluation was made on the three aspects of quality; high-grade impression, aesthetic satisfaction and mind soothing effect, by responding to questionnaire, similarly to Example 1.
The results are shown in Table 5.

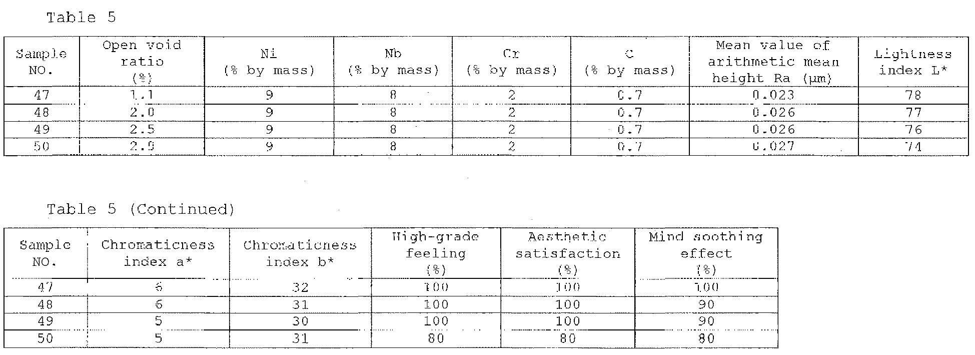

It can be seen from Table 5 that, compared to sample No. 50 that showed open void ratio of more than 2.5%, samples Nos. 47 to 49 that had an open void ratio of not more than 2.5% showed the lightness index L* of not less than 77, and produced a color tone more favorably accepted. As a result, not less than 90% of monitors positively evaluated for any of high-grade impression, aesthetic satisfaction and mind soothing effect, showing that most of the monitors were satisfied.

The decorative component for watch, decorative component for mobile terminal, decorative component for watch type mobile phone, decorative component for daily life articles, decorative component for vehicle parts, decorative component for sports goods, decorative component for musical instrument, decorative component for accessory, decorative component for architectural member, altar articles for religious practice and decorative component for home electric appliances that are formed from the ceramics for decorative component of the present invention, as described above, show golden color that is highly evaluated as especially beautiful color tone, which produces high-grade impression and aesthetic satisfaction, and therefore provides mind soothing effect through visual sense, favorably.

## Claims

1. Ceramics for decorative component, composed of titanium nitride-based sintered material which contains titanium nitride as a main component,
wherein the titanium nitride-based sintered material contains nickel, niobium, chromium and carbon, and
wherein a content of carbon is not less than 0.5% by mass nor more than 0.9% by mass.

2. The ceramics for decorative component according to Claim 1,
wherein an arithmetic mean height Ra of a decorative surface is not more than 0.03 µm,
wherein a lightness index L* is not less than 72 nor more than 84 in the L*a*b* color space of CIE1976 of the decorative surface, and
wherein a chromaticness indice a* is not less than 3 nor more than 9 and a chromaticness indice b* is not less than 27 nor more than 36, in the L*a*b* color space of CIE1976 of the decorative surface.

3. The ceramics for decorative component according to Claim 1,
wherein the titanium nitride-based sintered material has composition represented by TiNₓ, x being in a range of 0.8 ≤ x ≤ 0.96.

4. The ceramics for decorative component according to Claim 1,
wherein the ceramics contains nickel with a concentration of not less than 7% by mass nor more than 14.5% by mass, and niobium with a concentration of not less than 2.5% by mass nor more than 10% by mass.

5. The ceramics for decorative component according to Claim 1,
wherein the ceramics contains chromium with a concentration of not less than 1.5% by mass nor more than 6.5% by mass.

6. The ceramics for decorative component according to Claim 1,
wherein the titanium nitride-based sintered material has thermal conductivity of not less than 22 W/(m·K) nor more than 26 W/(m·K).

7. A decorative component for a watch, being formed from the ceramics for decorative component according to Claim 1.

8. A decorative component for a mobile terminal, being formed from the ceramics for decorative component according to Claim 1.

9. A decorative component for daily life articles, being formed from the ceramics for decorative component according to Claim 1.

10. A decorative component for vehicle parts, being formed from the ceramics for decorative component according to Claim 1.

11. A decorative component for sports goods, being formed from the ceramics for decorative component according to Claim 1.

12. A decorative component for musical, instrument, being formed from the ceramics for decorative component according to Claim 1.

13. A decorative component for accessory, being formed from the ceramics for decorative component according to Claim 1.
